# EUROPEAN PATENT SPECIFICATION

(11) **EP 3 652 227 B1**
(45) Date of publication and mention of the grant of the patent: **05.01.2022**
(21) Application number: 18737103.4
(22) Date of filing: 13.06.2018
(51) Int. Cl.: C08G 18/48, C08G 18/66, C08G 18/79, C08G 18/12, C08G 18/16, C08G 18/20, C08G 18/24, C08G 18/28, C08G 18/32, C09J 175/08

(54) **THREE-COMPONENT POLYURETHANE ADHESIVE COMPOSITIONS**
DREIKOMPONENTIGE POLYURETHANKLEBSTOFFZUSAMMENSETZUNGEN
COMPOSITIONS ADHÉSIVES DE POLYURÉTHANE À TROIS COMPOSANTS

(30) Priority: 11.07.2017 US 201762530893 P
(43) Date of publication of application: 20.05.2020
(73) Proprietor: DDP Specialty Electronic Materials US, LLC, Wilmington, DE 19805 (US)
(72) Inventor: GRUNDER, Sergio, CH-8810 Horgen (CH); SCHMATLOCH, Stefan, CH-8810 Horgen (CH); KUNZ, Joel, CH-8810 Horgen (CH)
(74) Representative: Houghton, Mark Phillip
(86) International application number: PCT/US2018/037317
(87) International publication number: WO 2019/013917

(56) References cited:
- WO-A1-03/009954
- WO-A1-2009/094905
- WO-A1-2012/078331
- WO-A1-2016/205255
- WO-A1-2017/062252
- US-A- 4 935 287
- US-B1- 6 348 121

## Description

### FIELD

The present invention relates to three-component polyurethane adhesive compositions and a process for their preparation.

### BACKGROUND

Fiber-reinforced plastics such as sheet molding compound (SMC), bulk molding compound (BMC) and reinforced dicyclopentadiene (DCPD) polymers are commonly used to form body panels and other exterior components of automobiles, trucks and other vehicles. These parts are often assembled to each other or to the rest of the vehicle through the use of an adhesive.

Two-part polyurethane adhesives are known to be useful in this application. Two-part types consist of a resin component that includes one or more polyisocyanate compounds, and a curative component that includes one or more polyols. For example, two-part adhesive compositions are disclosed in WO2014029891, and WO2014040916. Two-part fast curing two part adhesives are also disclosed in WO2014/040909 and US2015/0203728. Such two-part adhesive systems provide limited flexibility. Process flexibility may be defined as long open time that is the time between application of the adhesive to a first substrate and joining of a second substrate to the first substrate using the adhesive. Further, long mixer stand-alone times, the time the mixed two part adhesive can be kept in the mixer unit (static or dynamic) between two applications without gelling, are required to reduce the flushing intervals and therefore reduce waste. Fast cure, as evidenced by fast strength build up once the open time window closes, is desired to provide handling strength as soon as possible after final assembly of the components.

The two components of the two-part polyurethane adhesives are mixed such that the polyol component reacts with the isocyanate component to build up the network and polymerize. The two-part adhesives are typically applied with a two-part dispensing equipment and the two components are mixed in a dynamic mix-head. A problem associated with two-part adhesives is that due to the fast reacting compounds, the mix-head needs to be flushed after every application in order to prevent clogging. However, this flushing process is accompanied with a certain amount of material waste. Thus, in order to reduce the amount of waste material, a longer open time is desired thereby resulting in longer mixer stand time (i.e., the time that is allowed to leave the isocyanate component and the polyol component mixed in the mix-head without clogging the mixer). However, a longer open time results in slower curing of the adhesive.

Thus, it is desired to provide a three-component polyurethane adhesive composition which has a long open time at ambient temperature when all the components are mixed together before dispensing onto a substrate while providing for a rapid cure with a limited amount of flushing from the mix-head after each application.

### SUMMARY

The present invention addresses a need in the art by providing for a three-component polyurethane adhesive composition and a process for its preparation.

In one illustrative embodiment, a three-component polyurethane adhesive composition is provided which comprises:
(a) a first polyol component comprising (i) one or more polyols having a hydroxyl equivalent weight of 400 to 2000 and a nominal hydroxyl functionality of 2 to 4; (ii) one or more aliphatic diol chain extenders; (iii) from 0.01 to 1 weight percent, based on the total weight of the first polyol component, of one or more latent room temperature organometallic catalysts; and (iv) from 0.01 to 1 weight percent, based on the total weight of the first polyol component, of one or more blocked cyclic amidine compound catalysts;
(b) a second polyol component comprising (i) one or more polyols having a hydroxyl equivalent weight of 400 to 2000 and a nominal hydroxyl functionality of 2 to 4; (ii) one or more aliphatic diol chain extenders; (iii) from 0.01 to 1 weight percent, based on the total weight of the second polyol component, of one or more latent room temperature organometallic catalysts; and (iv) from 0.01 to 1 weight percent, based on the total weight of the second polyol component, of one or more blocked cyclic amidine compound catalysts; and
(c) an isocyanate component comprising (i) one or more isocyanate compounds; wherein the isocyanate component and the first and second polyol components are contacted at an isocyanate index of 0.5 to 2.

In one illustrative embodiment, a process for preparing a three-component polyurethane adhesive composition is provided which comprises:
(a) metering a first stream comprising a first polyol component into an in-line mixing unit, wherein the first polyol component comprises (i) one or more polyols having a hydroxyl equivalent weight of 400 to 2000 and a nominal hydroxyl functionality of 2 to 4; (ii) one or more aliphatic diol chain extenders; (iii) from 0.01 to 10 weight percent, based on the total weight of the first polyol component, of one or more latent room temperature organometallic catalysts; and (iv) from 0.01 to 1 weight percent, based on the total weight of the first polyol component, of one or more blocked cyclic amidine compound catalysts;
(b) metering a second stream comprising a second polyol component into the in-line mixing unit, wherein the second polyol component comprises (i) one or more polyols having a hydroxyl equivalent weight of 400 to 2000 and a nominal hydroxyl functionality of 2 to 4; (ii) one or more aliphatic diol chain extenders; (iii) from 0.01 to 1 weight percent, based on the total weight of the second polyol component, of one or more latent room temperature organometallic catalysts; and (iv) from 0.01 to 1 weight percent, based on the total weight of the second polyol component, of one or more blocked cyclic amidine compound catalysts; and
(c) metering a third stream comprising an isocyanate component into the in-line mixing unit, wherein the isocyanate component comprises (i) one or more isocyanate compounds; wherein the isocyanate component and the first and the second polyol components are contacted at an isocyanate index of 0.5 to 2;
   wherein the first polyol component, second polyol component and isocyanate component are contacted in the in-line mixing unit to form the three-component polyurethane adhesive composition; and
(d) dispensing the three-component polyurethane adhesive composition.

In one illustrative embodiment, a method of bonding two substrates is provided, which comprises forming a layer of the three-component polyurethane adhesive composition at a bondline between two substrates, and curing the layer at the bondline to form a cured adhesive bonded to each of the substrates.

The three-component polyurethane adhesive composition of the present invention advantageously exhibits excellent latency, and open time while providing for a rapid cure. Despite its latency, the adhesive composition cures well at room temperature, without the need for applied heating (apart from an exothermic temperature rise due to the curing reaction itself). Surprisingly, the three-component polyurethane adhesive composition of the present invention can be mixed in an in-line mixing unit within a very short time. This is a significant advantage, as it permits the three-component polyurethane adhesive composition to be in the mix-head without the need to be flushed after every application in order to prevent clogging.

### DETAILED DESCRIPTION

Disclosed is a three-component polyurethane adhesive composition comprising (a) a first polyol component, (b) a second polyol component and (c) an isocyanate component. The term "one or more" as used herein shall be understood to mean that at least one, or more than one, of the recited components may be used. Nominal with respect to functionality means the theoretical functionality; this can be calculated from the stoichiometry of the ingredients used. The actual functionality is different due to imperfections in raw materials, incomplete conversion of the reactants and formation of byproducts. Durability in this context means that the composition once cured remains sufficiently strong to perform its designed function, in the embodiment wherein the cured composition is an adhesive, the adhesive holds substrates together for the life or most of the life of the structure containing the cured composition. As an indicator of this durability, the curable adhesive composition can exhibit excellent results during accelerated aging. This means that after a set of substrates bonded together with the adhesive composition is exposed to heat aging, the failure mode in Quick Knife adhesion or Lap Shear testing is cohesive, meaning the adhesive breaks before the bond of the adhesive to the substrate breaks.

The three-component polyurethane adhesive composition exhibits excellent open times, rapid cure outside of the open times and strong bonding to a substrate such as fiber reinforced plastics and e-coated metal. "Open time" is understood to mean the time after application of the composition to a first substrate until it starts to become a high viscous paste and is not subject to deformation during assembly to conform to the shape of the second substrate and to adhere to it. Open time may be measured by rheology reactivity wherein the rheology reactivity is about 500 seconds or greater or about 600 seconds or greater.

The first polyol component (a) of the three-component polyurethane adhesive composition according to the present invention includes (i) one or more polyols having a hydroxyl equivalent weight (molecular weight divided by the number of hydroxyl groups per molecule) of 400 to 2000 and a nominal hydroxyl functionality of 2 to 4; (ii) one or more aliphatic diol chain extenders; (iii) from 0.01 to 1 weight percent, based on the total weight of the first polyol component, of one or more latent room temperature organometallic catalysts; and (iv) from 0.01 to 1 weight percent, based on the total weight of the first polyol component, of one or more blocked cyclic amidine compound catalysts.

Suitable one or more polyols (i) having a hydroxyl equivalent weight of 400 to 2000 and a nominal hydroxyl functionality of 2 to 4 include, for example, polyether polyols or a mixture of polyether polyols. Each polyether polyol has a hydroxyl equivalent weight of 400 to 2000. In illustrative embodiments, the hydroxyl equivalent weight of each polyol is at least 500, or at least 800 or at least 1000. In other illustrative embodiments, the hydroxyl equivalent weight of each polyol is up to 1800, or up to 1500 or up to 1200. In other illustrative embodiments, each such polyether polyol has a nominal hydroxyl functionality of 2 to 3. By "nominal functionality" of a polyether polyol, it is meant the average number of oxyalkylatable hydrogen atoms on the initiator compound that is alkoxylated to form the polyether polyol. The actual functionalities of the polyether polyol(s) may be somewhat lower than the nominal functionality, due to side-reactions that occur during the alkoxylation process. In the case of a mixture of polyether polyols, the number average nominal functionality is 2 to 3 and especially 2.5 to 3.

The polyether polyol(s) for use herein may be homopolymers of propylene oxide and copolymers of 70 to 99% by weight propylene oxide and 1 to 30% by weight ethylene oxide. Copolymers of propylene oxide and ethylene oxide are generally employed if a single polyether polyol is present. If two or more polyether polyols are present, then, for example, at least one is a copolymer of propylene oxide and ethylene oxide. In the case of a copolymer, the propylene oxide and ethylene oxide may be randomly copolymerized, block copolymerized, or both. In some embodiments, 50% or more of the hydroxyl groups of the polyether polyol or mixture of polyether polyols are primary hydroxyl, with the remainder being secondary hydroxyl groups. In some embodiments, 70% or more of the hydroxyl groups in the polyether polyol or mixture thereof may be primary hydroxyl.

In an illustrative embodiment, the polyether polyol(s) may constitute 35 weight percent or greater of the first polyol component. In other illustrative embodiments, the polyether polyol(s) may constitute 40 weight percent or greater or 50 weight percent or greater of the first polyol component. In another illustrative embodiment, the polyether polyol(s) may constitute 80 weight percent or less, or 65 weight percent or less or about 55 weight percent or less of the first polyol component.

The first polyol component of the three-component polyurethane adhesive composition according to the present invention further includes one or more aliphatic diol chain extenders (ii). The aliphatic diol chain extender(s) can each have a hydroxyl equivalent weight of 200 or less, or 100 or less, or 75 or less or 60 or less and can have two aliphatic hydroxyl groups per molecule. Suitable one or more aliphatic diol chain extenders include, for example, monoethylene glycol, diethylene glycol, triethylene glycol, 1,2-propane diol, 1,3-propane diol, 2,3-dimethyl-1,3-propanediol, dipropylene glycol, tripropylene glycol, 1,4-butanediol, 1,6-hexanediol and other linear or branched alkylene diols having up to 20 carbon atoms. In one illustrative embodiment, the one or more aliphatic diol chain extenders include, for example, monoethylene glycol, 1,4-butanediol or a mixture thereof.

In general, the one or more aliphatic diol chain extenders are present in an amount of 2.5 to 6 equivalents per equivalent of one or more polyols of the first polyol component. In one illustrative embodiment, the one or more aliphatic diol chain extenders may be present in an amount of 0.1 weight percent or greater, or 1.0 weight percent or greater, or 2.0 weight percent or greater, or 3.0 weight percent or greater, all based on the total weight of the first polyol component. In one illustrative embodiment, the one or more aliphatic diol chain extenders may be present in an amount of 10 weight percent or less, or 9 weight percent or less, or 8 weight percent or less, or 7 weight percent or less, or 6 weight percent or less, all based on the total weight of the first polyol component.

The first polyol component of the three-component polyurethane adhesive composition according to the present invention further includes one or more latent room temperature organometallic catalysts (iii). A latent room temperature organometallic catalyst is a catalyst that functions to catalyze the reaction of the nucleophiles (polyols, polyamines) present in the first polyol component with the isocyanates present in the isocyanate component. The latent organometallic catalyst may show delayed action. Any latent room temperature organometallic catalyst which provides a good open time, acceptable initial lap shear strengths and which maintain an acceptable level of reactivity after partial curing and storage may be utilized.

Representative classes of latent room temperature organometallic catalysts include, for example, organometallic catalysts containing tin, zinc or bismuth. In one illustrative embodiment, suitable latent room temperature organometallic catalysts include, for example, zinc alkanoates, bismuth alkanoates, dialkyltin alkanoates, dialkyl tin mercaptides, dialkyl tin bis(alkylmercaptoacetates), dialkyltin thioglycolates or mixtures thereof. In one illustrative embodiment, suitable latent room temperature organometallic catalysts include, for example, zinc neoalkanoates, bismuth neoalkanoates, dialkyltin neoalkanoates, dialkyl tin mercaptides, dialkyl tin bis(alkylmercaptoacetates), dialkyltin thioglycolates or mixtures thereof. In another illustrative embodiment, suitable latent room temperature organometallic catalysts include, for example, dialkyl tin mercaptides, dialkyl tin bis(alkylmercaptoacetates), dialkyltin thioglycolates or mixtures thereof. In one embodiment, the latent room temperature organometallic catalysts may be dialkyltin thioglycolates or mixtures thereof. The alkyl groups on the latent room temperature organometallic catalysts may be any alkyl groups of 1 or more carbon atoms or 4 or more carbon atoms. In one illustrative embodiment, the alkyl groups on the latent room temperature organometallic catalysts may be any alkyl groups of 20 or less carbon atoms or 12 or less carbon atoms. Suitable alkyl groups include, for example, methyl, butyl, octyl and dodecyl groups.

The one or more latent room temperature organometallic catalysts may be present in an amount sufficient to provide good open time, acceptable initial lap shear strengths and which maintains an acceptable level of reactivity after partial curing and storage. In one embodiment, the one or more latent room temperature organometallic catalysts (iii) may be present in an amount of 0.02 to 0.3 weight percent, based on the total weight of the first polyol component. In one embodiment, the one or more latent room temperature organometallic catalysts (iii) may be present in an amount of 0.03 to 0.1 weight percent, based on the total weight of the first polyol component. These amounts are based on active catalyst, and ignore the mass of solvents or other materials as may be present in the catalyst product.

The first polyol component of the three-component polyurethane adhesive composition according to the present invention further includes one or more blocked cyclic tertiary amine catalysts (iv). Any blocked cyclic tertiary amine which provides good open time, acceptable initial lap shear strengths and which maintains an acceptable level of reactivity after partial curing and storage may be utilized. In one embodiment, any acid blocked cyclic tertiary amine which provides good open time, acceptable initial lap shear strengths and which maintains an acceptable level of reactivity after partial curing and storage may be utilized. In another embodiment, any carboxylic acid blocked cyclic tertiary amine which provides good open time, acceptable initial lap shear strengths and which maintains an acceptable level of reactivity after partial curing and storage may be utilized.

Suitable blocked cyclic tertiary amines catalysts include, for example, aromatic or cycloaliphatic compounds with pending amines or aromatic or cycloaliphatic compounds with one or more nitrogen atoms incorporated into the ring structure. In one embodiment, suitable one or more blocked cyclic amidine catalysts include, for example, 1,8-diazabicyclo[5.4.0]undec-7-ene (DBU), 1,5 -diazabicyclo[4 .3.0]non-5-ene (DBN). The blocking agent may be an aliphatic carboxylic acid having 1 to 24 carbon atoms, or from 1 to 8 carbon atoms.

Any phenol blocked cyclic tertiary amine catalyst which provides good open time, acceptable initial lap shear strengths and which maintains an acceptable level of reactivity after partial curing and storage may be utilized as a blocked cyclic amidine compound catalyst. Suitable phenol blocked cyclic tertiary amines include, for example, phenol blocked cyclic amidine catalysts, aromatic or cycloaliphatic structures with pending amines or aromatic or cycloaliphatic structures with one or more nitrogen atoms incorporated into the ring structures. In one embodiment, suitable one or more phenol blocked cyclic amidine catalysts include, for example, DBU, DBN. The blocking agent may be a phenolic compound such as a phenol itself or a substituted phenol.

In one embodiment, the one or more blocked cyclic tertiary amine catalysts (iv) may be present in an amount of 0.03 to 0.5 weight percent, based on the total weight of the first polyol component. In one embodiment, the one or more blocked cyclic tertiary amine catalysts (iv) may be present in an amount of 0.03 to 0.3 weight percent, based on the total weight of the first polyol component.

The second polyol component (b) of the three-component polyurethane adhesive composition according to the present invention includes (i) one or more polyols having a hydroxyl equivalent weight of 400 to 2000 and a nominal hydroxyl functionality of 2 to 4; (ii) one or more aliphatic diol chain extenders; (iii) from 0.01 to 1 weight percent, based on the total weight of the second polyol component, of one or more latent room temperature organometallic catalysts; and (iv) from 0.01 to 1 weight percent, based on the total weight of the second polyol component, of one or more blocked cyclic amidine compound catalysts.

Each of components (i)-(iv) of the second polyol component can be any of those discussed hereinabove for the first polyol component. In addition, each of components (i) and (ii) of the second polyol component can be employed in the same or different amounts discussed hereinabove for the first polyol component. As for components (iii) and (iv) of the second polyol component, in one embodiment, the one or more latent room temperature organometallic catalysts (iii) may be present in an amount of 0.02 to 0.3 weight percent, based on the total weight of the second polyol component. In another embodiment, the one or more latent room temperature organometallic catalysts (iii) may be present in an amount of 0.03 to 0.1 weight percent, based on the total weight of the second polyol component. These amounts are based on active catalyst, and ignore the mass of solvents or other materials as may be present in the catalyst product.

In one embodiment, the one or more blocked cyclic tertiary amine catalysts (iv) may be present in an amount of 0.03 to 0.5 weight percent, based on the total weight of the second polyol component. In one embodiment, the one or more blocked cyclic tertiary amine catalysts or one or more phenol blocked cyclic tertiary amine catalysts (iv) may be present in an amount of 0.03 to 0.3 weight percent, based on the total weight of the second polyol component.

In one embodiment, the amount of the one or more latent room temperature organometallic catalysts of the first polyol component is different than the amount of the one or more latent room temperature organometallic catalysts of the second polyol component. In another embodiment, the amount of the one or more blocked cyclic amidine compound catalysts of the first polyol component is different than the amount of the one or more blocked cyclic amidine compound catalysts of the second polyol component. In another embodiment, the amounts of the one or more latent room temperature organometallic catalysts and the one or more blocked cyclic amidine compound catalysts of the first polyol component are different than the amounts of the one or more latent room temperature organometallic catalysts and the one or more blocked cyclic amidine compound catalysts of the second polyol component.

By altering the amounts of the one or more latent room temperature organometallic catalysts and the one or more blocked cyclic amidine compound catalysts of the first and second polyol components, the two polyol components can exhibit different reactivity, namely open times and different curing kinetics: Accordingly, the first polyol component can exhibit a short open time and fast curing kinetics; while the second polyol component can exhibit a long open time and slow curing kinetics. Thus, the different open times and curing kinetics of the two polyol components can be obtained by the different catalysts and respective amounts.

Optionally, the first and second polyol components of the three-component polyurethane adhesive composition according to the present invention may further include one or more multifunctional polyols having a functionality of greater than 3. In general, any multifunctional polyol that improves both the room temperature cure as well as the open times monitored by a prolonged viscosity onset (measured by rheology reactivity) may be used in the three-component polyurethane adhesive composition according to the present invention. In one illustrative embodiment, the one or more multifunctional polyols may have a functionality of 3 or greater, or 4 or greater, or 5 or greater. In one illustrative embodiment, the one or more multifunctional polyols may have a functionality of 8 or less, or 7 or less.

Suitable one or more multifunctional polyols can include, for example, the residue of an initiator having the recited functionalities. The initiators may be any compound having 3 or more active hydrogen functional groups. The active hydrogen functional groups may be hydroxyl groups or amines groups. In one illustrative embodiment, the intiators may have a functionality of 3 or greater, or 4 or greater, or 5 or greater. In another embodiment, the initiators may have a functionality of 8 or less, or 7 or less.

In one illustrative embodiment, the initiators may function as the one or more multifunctional polyols. If desired, the initiators may be reacted with alkylene oxides, alkane diols or cyclic either to form alkylene oxide chains on the active hydrogen functional groups. The processes for forming the chains are well known to the skilled artisan. As one skilled in the art will readily appreciate, the formed products are commercially available. In some embodiments the alkylene oxide chains include, for example, one or more of oxyethylene, oxypropylene and oxybutylene groups, or one or both of oxyethylene or oxypropylene groups. Where there are two or more oxyalkylene groups present in the alkylene oxide chain, the groups may be arranged in a random manner or in blocks. The oxyalkylene chains may be oxyethylene and oxypropylene groups arranged in blocks. In one embodiment, the oxyethylene chains may be the terminal blocks.

In one illustrative embodiment, the oxyethylene blocks may be 30 weight percent or less of the chains or 20 weight percent or less of the chains. In another illustrative embodiment, the oxyethylene blocks may be 1 weight percent or greater of the chains or 10 weight percent or greater of the chains. The remainder of the chains may be oxypropylene units. In one illustrative embodiment, the oxyalkylene chains may have an equivalent weight of about 100 or greater, or 150 or greater or 190 or greater. In another illustrative embodiment, the oxyalkylene chains may have an equivalent weight of 2000 or less, or 1500 or less, or 1000 or less.

Suitable initiators include, for example, sugar polyols, polyols initiated by simple sugars or derivatives thereof, for example sucrose or derivatives thereof, multifunctional amines.

In general, the one or more multifunctional polyols may be present in an amount of 1 weight percent or greater, based on the total weight of the first or second polyol component, or 3 weight percent or greater, based on the total weight of the first or second polyol component, or 5 weight percent or greater, based on the total weight of the first or second polyol component. The multifunctional polyols may be present in an amount of about 10 weight percent or less, based on the total weight of the first or second polyol component, or 9 weight percent or less, based on the total weight of the first or second polyol component, or 8 weight percent or less, based on the total weight of the first or second polyol component.

Optionally, the first and second polyol components may contain the same or different compounds having primary and/or secondary amino groups. Representative compounds having primary and/or secondary amino groups include polyoxyalkylene polyamines having 2 or greater amines per polyamine, preferably 2 to 4 amines per polyamine and most preferably 2 to 3 amines per polyamine. In one embodiment, the polyoxyalkylene polyamines may have a weight average molecular weight of 200 or greater, or 400 or greater. In one embodiment, the polyoxyalkylene polyamine may have a weight average molecular weight of 5,000 or less or 3,000 or less. Examples of such polyoxyalkylene polyamines are JEFFAMINE^{™} D-T-403 polypropylene oxide triamine having a molecular weight of 400 and JEFFAMINE^{™} D-400 polypropylene oxide diamine having a molecular weight of 400.

The compounds having primary and/or secondary amino groups are present in a sufficient amount to prevent the composition from sagging once mixed and applied. In one embodiment, the compounds having primary and/or secondary amino groups may be present in an amount of 0.2 weight percent or greater, based on the total weight of the first or second polyol component, or 0.3 weight percent or greater, based on the total weight of the first or second polyol component, or 0.5 weight percent or greater, based on the total weight of the first or second polyol component. In another embodiment, the compounds having primary and/or secondary amino groups may be present in an amount of 6 weight percent or less, based on the total weight of the first or second polyol component, or 4 weight percent or less, based on the total weight of the first or second polyol component, or 2 weight percent or less, based on the total weight of the first or second polyol component.

Optionally, the first and second polyol components may further contain one or more of the same or different optional components. In one embodiment, the first and second polyol components may contain one or more of the same or different particulate fillers. Suitable one or more particulate fillers include, for example, particulate fillers in the form of particles having a size of 50 nm to 100 µm. In one embodiment, the one or more particulate fillers may have a particle size (d50) of 250 nm or greater, or 500 nm or greater or 1 µm or greater. In one embodiment, the one or more particulate fillers may have a particle size (d50) of 50 µm or less, 25 µm or less or 10 µm or less. Particles sizes are conveniently measured using dynamic light scattering methods, or laser diffraction methods for particles having a size below about 100 nm.

The particulate fillers are a solid material at room temperature, and not soluble in the other ingredients of the of the first or second polyol component or in the polyisocyanate component or any ingredient thereof. In general a filler is a material that does not melt, volatilize or degrade under the conditions of the curing reaction between the polyols and polyisocyanate components. Suitable particulate fillers include, for example, an inorganic filler such as glass, silica, boron oxide, boron nitride, titanium oxide, titanium nitride, fly ash, calcium carbonate, various alumina-silicates including clays such as wollastonite and kaolin, metal particles such as iron, titanium, aluminum, copper, brass, bronze; thermoset polymer particles such as polyurethane, cured particles of an epoxy, phenol-formaldehyde, or cresol-formaldehyde resin, crosslinked polystyrene; thermo-plastics such as polystyrene, styrene-acrylonitrile copolymers, polyimide, polyamide-imide, polyether ketone, polyether-ether ketone, polyethyleneimine, poly(p-phenylene sulfide), polyoxymethylene, polycarbonate; and various types of carbon such as activated carbon, graphite, carbon black. In some embodiments, the particulate filler excludes carbon particles. The particles in some embodiments have an aspect ratio of up to 5, or up to 2, or up to 1.5. If desired, some or all of the filler particles can be grafted onto one or more of the polyether polyol(s) that constitute ingredient (a) of the polyol component.

If the one or more particulate fillers are present, they constitute no more than 60 weight percent, based on the total weight of the first or second polyol component. In one embodiment, the one or more particulate fillers may constitute 25 weight percent or greater, based on the total weight of the first or second polyol component. In one embodiment, the one or more particulate fillers may constitute about 60 weight percent or less, based on the total weight of the first or second polyol component, or 50 weight percent or less, based on the total weight of the first or second polyol component.

Optionally, the first and second polyol components may further contain one or more of the same or different dispersing aids, which wet the surface of the filler particles and help them disperse into, for example, the polyether polyol(s). The one or more dispersing aids may also have the effect of reducing viscosity. Suitable one or more dispersing aids include, for example, dispersing aids which are commercially available and sold by such sources as BYK Chemie under the BYK, DISPERBYK and ANTI-TERRA-U tradenames, such as alkylammonium salt of a low-molecular-weight polycarboxylic acid polymer and salts of unsaturated polyamine amides and low-molecular acidic polyesters, and fluorinated surfactants such as FC-4430, FC-4432 and FC-4434 from 3M Corporation. Such dispersing aids may constitute, for example, up to 2 weight percent, or up to 1 weight percent, of the first or second polyol component.

Optionally, the first and second polyol components may further contain the same or different desiccants such as, for example, fumed silica, hydrophobically modified fumed silica, silica gel, aerogel, various zeolites and molecular sieves. One or more desiccants may constitute 1 weight percent or greater, based on the total weight of the first or second polyol component, or 5 weight percent or less, based on the total weight of the first or second polyol component, or about 4 weight percent or less, based on the total weight of the first or second polyol component. In one embodiment, the first and/or second polyol component does not include a desiccant.

Optionally, the first and second polyol components may further contain one or more of the same or different plasticizers. Suitable plasticizers include, for example, a phthalate, terephthalate, mellitate, sebacate, maleate or other ester plasticizer, a sulfonamide plasticizer, a phosphate ester plasticizer, or a polyether di(carboxylate) plasticizer. The plasticizer may be present in the first and second polyol components in an amount of 10 weight percent or less, based on the total weight of the first or second polyol component, or 5 weight percent or less, based on the total weight of the first or second polyol component, or about 1 weight percent, based on the total weight of the first or second polyol component, of one or more of the same or different plasticizers. In one embodiment, the first and/or second polyol component does not include a plasticizer.

The first and second polyol components exhibit an average functionality of all of the polyols, hydroxyl compounds such that the adhesive composition exhibits good latency and rapid cure rate after the latency period. The average functionality, which may be the same or different for the first and second polyol components, may be 2.0 or greater, or 2.1 or greater or 2.2 or greater. In another embodiment, the average functionality, which may be the same or different for the first and second polyol components, may be 3.0 or less, or 2.7 or less or 2.5 or less. The average functionality is a nominal functionality based on calculations using the nominal functionality of the hydroxyl functional polyols.

Optionally, the first and second polyol components may further contain one or more of the same or different additional isocyanate-reactive compounds, which are different from ingredients (i), (ii) and (iii) of the first and second polyol components, and which do not contain amine hydrogen atoms. The term isocyanate-reactive compound as used herein includes any organic compound having nominally at least two isocyanate-reactive moieties. An isocyanate reactive moiety can be an active hydrogen containing moiety. The term "moiety" refers to a moiety containing a hydrogen atom which, because of its position in the molecule, displays significant activity according to the Zerewitinoff test described by Wohler in the Journal of the American Chemical Society, Vol. 49, p. 3181 (1927). Suitable isocyanate reactive moieties include, for example, active hydrogen moieties such as -COOH, -OH, -NH₂, -NH-, -CONH₂, -SH, and -CONH-. Exemplary active hydrogen containing compounds, isocyanate reactive moiety containing compounds, include polyols, polyamines, polymercaptans and polyacids. In one embodiment, the isocyanate reactive compound is a polyol, such as a polyether polyol.

If any such additional isocyanate-reactive compound(s) are present, they can constitute no more than 10 weight percent, based on the total weight of the first or second polyol component or no more than 5 weight percent based on the total weight of the first or second polyol component or no more than 2 weight percent, based on the total weight of the first or second polyol component. Suitable additional isocyanate-reactive compounds include, for example, one or more polyester polyols; one or more polyether polyols containing at least 50 weight percent polymerized ethylene oxide; one or more polyether polyols having a hydroxyl equivalent weight of 100 to 499; and one or more hydroxyl functional crosslinkers having three or more isocyanate-reactive groups per molecule and a hydroxyl equivalent weight of up to 499.

The isocyanate component (c) of the three-component polyurethane adhesive composition according to the present invention includes one or more isocyanate compounds (i) such as one or more polyisocyanates. Suitable isocyanate components (c) include, for example, a mixture of one or more isocyanate-terminated prepolymers having at least 2 isocyanate groups per molecule and an isocyanate equivalent weight of 700 to 3500, and one or more low equivalent weight polyisocyanate compounds that have an isocyanate equivalent weight of up to 350 and 2 to 4 isocyanate groups per molecule. When such a mixture is present, the prepolymer may constitute 20 to 65 weight percent, based on the total weight of the isocyanate component. In some embodiments, the prepolymer can constitute from 20 to 60 weight percent, based on the total weight of the isocyanate component, or from 20 to 50 weight percent, based on the total weight of the isocyanate component, or from 25 to 35 weight percent, based on the total weight of the isocyanate component. The low equivalent weight polyisocyanate, when such a mixture is present, may constitute 20 to 50 weight percent, based on the total weight of the isocyanate component.

The isocyanate content in the prepolymers may be 1 weight percent or greater, or 6 weight percent or greater, or 8 weight percent or greater or 10 weight percent or greater. The isocyanate content in the isocyanate functional prepolymers may be 35 weight percent or less, or 30 weight percent or less, or 25 weight percent or less or 15 weight percent or less. Isocyanate content as used herein means the weight percent of isocyanate groups in the designated component, such as prepolymer. The isocyanate content can be measured by analytical techniques known to one skilled in the art, for example by potentiometric titration with an active hydrogen containing compound, such as dibutyl amine. Typically, the residual content of a component can be calculated from the ingredients utilized to prepare the component or composition. Alternatively, it can be determined utilizing known analytical techniques.

The prepolymer may be a reaction product of one or more aromatic diisocyanates having a molecular weight of up to 350 with (i) at least one 700 to 3000 molecular weight homopolymer of poly(propylene oxide) having a nominal hydroxyl functionality of 2 to 4, or (ii) a mixture of (i) with up to 3 parts by weight, per part by weight of (i), of a 2000 to 8000 molecular weight polyether polyol which is a copolymer of 70 to 99 weight percent propylene oxide and 1 to 30 weight percent ethylene oxide and has a nominal hydroxyl functionality of 2 to 4. The poly(propylene oxide) used to make the prepolymer may have a molecular weight of 800 to 2000 or from 800 to 1500, and may have a nominal functionality of 2 to 3, and especially 2. A copolymer of 70 to 99 weight percent propylene oxide and 1 to 30 weight percent ethylene oxide may be used to make the prepolymer and may have a molecular weight of 3000 to 5500 and a nominal functionality of 2 to 3.

The reaction of a polyisocyanate and polyol(s) produces prepolymer molecules having a polyether segment that is capped with the polyisocyanate, so the molecules have terminal isocyanate groups. Each prepolymer molecule contains a polyether segment that corresponds to the structure, after removal of hydroxyl groups, of a polyol used in the prepolymer-forming reaction. If a mixture of polyols is used to make the prepolymer, a mixture of prepolymer molecules is formed.

The isocyanate-terminated prepolymer can have an isocyanate equivalent weight of from 700 to 3500, or from 700 to 3000 or from 1000 to 3000. The equivalent weight as used herein is calculated by adding the weight of the polyol(s) used to prepare the prepolymer and the weight of polyisocyanate(s) consumed in the reaction with the polyol(s), and dividing by the number of moles of isocyanate groups in the resulting prepolymer. The polyisocyanate used to make the prepolymer can be any of the low equivalent weight polyisocyanate compounds mentioned herein, or a mixture of two or more of these. The prepolymer has 2 or more, or from 2 to 4, or from 2 to 3, isocyanate groups per molecule. The isocyanate groups of the prepolymer may be aromatic, aliphatic (including alicyclic), or a mixture of aromatic and aliphatic isocyanate groups. The isocyanate groups on the prepolymer molecules may be aromatic. The low equivalent weight polyisocyanate compound(s) in some embodiments have an isocyanate equivalent weight of from 80 to 250, or from 80 to 200, or from 80 to 180. If a mixture of polyisocyanate compounds is present, the mixture may have, for example, an average of 2 to 4 or 2.3 to 3.5 isocyanate groups per molecule.

All or a portion of the low equivalent weight polyisocyanate compound may have aromatic isocyanate groups. Suitable aromatic polyisocyanate compounds include, for example, m-phenylene diisocyanate, toluene-2,4-diisocyanate, toluene-2,6-di-isocyanate, naphthylene-1,5-diisocyanate, methoxyphenyl-2,4-diisocyanate, diphenyl-methane-4,4'-diisocyanate, diphenylmethane-2,4'-diisocyanate, 4,4'-bi-phenylene diisocyanate, 3,3'-dimethoxy-4,4'-biphenyl diisocyanate, 3,3'-dimethyl-4-4'-biphenyl diisocyanate, 3,3'-dimethyldiphenyl methane-4,4'-diisocyanate, 4,4',4"-triphenyl methane triisocyanate, polymethylene polyphenylisocyanate (PMDI), toluene-2,4,6-triisocyanate and 4,4'-dimethyldiphenylmethane-2,2',5,5'-tetraisocyanate.

Modified aromatic polyisocyanates that contain urethane, urea, biuret, carbodiimide, uretoneimine, allophonate or other groups formed by reaction of isocyanate groups are also useful. The aromatic polyisocyanate may be MDI or PMDI (or a mixture thereof that is commonly referred to as "polymeric MDI"), and so-called "liquid MDI" products that are mixtures of MDI and MDI derivatives that have biuret, carbodiimide, uretoneimine and/or allophonate linkages. All or a portion of the low equivalent weight polyisocyanate compounds may be one or more aliphatic polyisocyanates or cycloaliphatic polyisocyanates. Suitable aliphatic polyisocyanates or cycloaliphatic polyisocyanates include, for example, cyclohexane diisocyanate, 1,3- and/or 1,4-bis(isocyanatomethyl)cyclohexane, 1-methyl-cyclohexane-2,4-diisocyanate, 1-methylcyclohexane-2,6-diisocyanate, methylene dicyclohexane diisocyanate, isophorone diisocyanate and hexamethylene diisocyanate.

At least some of the polyisocyanate groups present in the polyisocyanate component may be aromatic isocyanate groups. If a mixture of aromatic and aliphatic isocyanate groups are present, 50% or more by number, or 75% or more by number, are aromatic isocyanate groups. In one embodiment, 80 to 98% by number of the isocyanate groups may be aromatic, and 2 to 20% by number may be aliphatic. All of the isocyanate groups of the prepolymer may be aromatic, and the isocyanate groups of the polyisocyanate compound(s) having an isocyanate equivalent weight of up to 350 may be a mixture of 80 to 95% aromatic isocyanate groups and 5 to 20% aliphatic isocyanate groups.

It is often convenient to prepare a prepolymer by combining the polyol(s) or polyol mixture with an amount of low equivalent weight polyisocyanate compound(s) significantly greater than needed to simply cap the polyol(s). After reaction, this produces a mixture of the prepolymer and unreacted low equivalent weight polyisocyanate compounds. If desired, an additional amount of polyisocyanate compound(s) can then be blended into this mixture. In certain embodiments, the polyol(s) are combined and reacted with an excess of one or more aromatic polyisocyanates to produce a mixture of prepolymer and unreacted starting polyisocyanate compounds, and this mixture then is combined with one or more aliphatic polyisocyanates.

The prepolymer may be made in a reaction of the polyol(s) with MDI, PMDI, a polymeric MDI, a derivative of any one or more of these that contains biuret, carbodiimide, uretoneimine and/or allophonate, or a mixture of any two or more of these, to produce a mixture of prepolymer and unreacted starting polyisocyanates, and the mixture is then combined with one or more aliphatic polyisocyanates, especially an aliphatic polyisocyanate based on hexamethylene diisocyanate.

Optionally, the isocyanate component (c) may contain up to 50 weight percent of one or more particulate fillers as described hereinabove. In one embodiment, the isocyanate component (c) contains 10 weight percent or greater, based on the total weight of the isocyanate component, of one or more of such fillers, or 20 weight percent or greater, based on the total weight of the isocyanate component, of one or more such fillers. In one embodiment, the isocyanate component (c) contains from 20 to 50 weight percent, based on the total weight of the isocyanate component, or 30 to 40 weight percent, based on the total weight of the isocyanate component. In one embodiment, the filler may exclude carbon particles.

Optionally, the isocyanate component (c) may contain one or more other additional ingredients, such as those described above with respect to the first and second polyol components. As with the first and second polyol components, the isocyanate component may contain 0.5 weight percent or less, based on the total weight of the isocyanate component, or 0.1 weight percent or less, based on the total weight of the isocyanate component, of organic compounds having a boiling temperature of 80°C or less, and 0.1 weight percent or less, based on the total weight of the isocyanate component, or 0.05 weight percent or less, based on the total weight of the isocyanate component, of water and/or other chemical blowing agents that produce a gas under the conditions of the curing reaction. The isocyanate component may contain at most, amounts of plasticizers as described before with respect to the first and second polyol components. In one embodiment, the isocyanate component may be devoid of a plasticizer.

The first and second polyol components and isocyanate component are formulated such that the isocyanate index is 0.5 to 2.0, or 0.9 to 1.8, or 0.9 to 1.5, or 1 to 1.5. "Isocyanate index" is the ratio of the number of isocyanate groups in the isocyanate component to the number of isocyanate-reactive groups in the polyol components.

The three-component polyurethane adhesive composition according to the present invention can be obtained by a process including at least the steps of (a) metering a first stream comprising the first polyol component into an in-line mixing unit, (b) metering a second stream comprising the second polyol component into the in-line mixing unit, (c) metering a third stream comprising the isocyanate component into the in-line mixing unit, wherein the first polyol component, second polyol component and isocyanate component are contacted in the in-line mixing unit to form the three-component polyurethane adhesive composition; and (d) dispensing the three-component polyurethane adhesive composition. The in-line mixing unit can be, for example, a static mixing unit or a dynamic mixing unit.

The first polyol component, second polyol component and isocyanate component are metered into the in-line mixing unit in a volume weight ratio of the first polyol component to the second polyol component to the isocyanate component of 0.1:49.9:50 to 49.9:0.1:50. In one embodiment, the first polyol component, second polyol component and isocyanate component are metered into the in-line mixing unit in a volume ratio of the first polyol component to the second polyol component to the isocyanate component of 1:49:50 to 49:1:50. In one embodiment, the first polyol component, second polyol component and isocyanate component are metered into the in-line mixing unit in a volume ratio of the first polyol component to the second polyol component to the isocyanate component of 10:40:50 to 40:10:50. In one embodiment, the first polyol component, second polyol component and isocyanate component are metered into the in-line mixing unit in a volume ratio of the first polyol component to the second polyol component to the isocyanate component of 20:30:50 to 30:20:50.

In another embodiment, the three-component polyurethane adhesive composition according to the present invention will have an open time of 3 minutes or greater after contacting the first polyol component, the second polyol component and the isocyanate component. In another embodiment, the three-component polyurethane adhesive composition according to the present invention will have an open time of 4 minutes or greater after contacting the first polyol component, the second polyol component and the isocyanate component. In one embodiment, the three-component polyurethane adhesive composition according to the present invention will have an open time of 6 minutes or greater after contacting the first polyol component, the second polyol component and the isocyanate component. In another embodiment, the three-component polyurethane adhesive composition according to the present invention will contain a volume ratio of the first polyol component to the second polyol component to the isocyanate component of to the isocyanate component of 0.1:49.9:50 to 49.9:0.1:50, and will have an open time of 3 minutes or greater after contacting the first polyol component, the second polyol component and the isocyanate component. In another embodiment, the three-component polyurethane adhesive composition according to the present invention will contain a volume ratio of the first polyol component to the second polyol component to the isocyanate component of to the isocyanate component of 0.1:49.9:50 to 49.9:0.1:50, and will have an open time of 4 minutes or greater after contacting the first polyol component, the second polyol component and the isocyanate component.

The first polyol component, second polyol component and isocyanate component are advantageously contacted in the in-line mixing unit in any order and amount taking into consideration the volume ratio discussed above. For example, the first polyol component can first be metered into the in-line mixing unit, followed by the second polyol component and then the isocyanate component. In one embodiment, a first amount of the fast curing polyol component can be metered into the in-line mixing unit, followed by the slow curing polyol component, followed by the remaining amount of the fast curing polyol component and then the isocyanate component.

In one embodiment, the first polyol component, second polyol component and isocyanate component are advantageously contacted in the in-line mixing unit for a time of less than 1.5 seconds, e.g., from 0.1 to less than 1.5 seconds. In one embodiment, the first polyol component, second polyol component and isocyanate component are advantageously contacted in the in-line mixing unit for a time of from 0.1 to 60 seconds to form the three-component polyurethane adhesive composition. In one embodiment, the first polyol component, second polyol component and isocyanate component are advantageously contacted in the in-line mixing unit for a time of from 0.1 to 10 seconds to form the three-component polyurethane adhesive composition.

In one illustrative embodiment, the adhesive composition is non-cellular. In another illustrative embodiment, the first and second polyol components can individually contain 0.5 weight percent or less, or 0.1 weight percent or less of organic compounds having a boiling temperature of 80°C or below. In another illustrative embodiment, the first and second polyol components can individually contain 0.1 weight percent or less, or 0.05 weight percent or less, of water and/or other chemical blowing agents that produce a gas under the conditions of the curing reaction. In another illustrative embodiment, the first and second polyol components can individually contain 0.5 weight percent or less, 0.1 weight percent or less of organic compounds having a boiling temperature of 80°C or below, and 0.1 weight percent or less, or 0.05 weight percent or less, of water and/or other chemical blowing agents that produce a gas under the conditions of the curing reaction.

Once the first polyol component, second polyol component and isocyanate component are contacted in the in-line mixing unit to form the three-component polyurethane adhesive composition, the three-component polyurethane adhesive composition can then be dispensed. In one embodiment, a process for bonding two substrates is provided which includes applying the three-component polyurethane adhesive composition to at least a portion of a first substrate; and contacting a second substrate with the first substrate with the three-component polyurethane adhesive composition being disposed between the first and second substrate. The mixed adhesive composition is formed into an adhesive layer between and in contact with the two substrates. If desired, an adhesion promoter may be applied to one or both of the substrates prior to contacting the substrate(s) with the three-component polyurethane adhesive composition. The adhesive layer is then cured between and in contact with the two substrates to form a layer of cured adhesive bonded to each of the two substrates.

The first polyol component, second polyol component and isocyanate component often will react spontaneously upon mixing at room temperature (about 22°C) and cure without the need to heat the adhesive to a greater temperature. Curing may be effected by simply mixing the components at a temperature of, for example, 0 to 35°C and allowing the components to react at that temperature. At approximately room temperature, the three-component polyurethane adhesive composition may exhibit an open time of 2 minutes or greater, or 3 minutes or greater, or 4 minutes or greater, or from 3 to 10 minutes, measured as described in the examples. In one embodiment, the three-component polyurethane adhesive composition may exhibit an open time of no more than 10 minutes at approximately room temperature. Often, the adhesive will fully cure without exposing it to elevated temperature, infrared radiation or other energy source, due at least in part to the catalytic action of the latent room temperature organometallic catalysts, e.g., dialkyltinthioglycolate catalyst. In addition, it is believed that the acid-blocked cyclic amidine catalyst de-blocks during the infrared heating stage, to produce an active catalyst that also promotes the cure during the subsequent curing step, even if that subsequent step is performed without additional applied energy.

If necessary or desired, heating can be applied to the adhesive to obtain a more rapid cure. In general, the first polyol component, second polyol component and isocyanate component may be mixed at a lower temperature, such as 0 to 35°C and then heated to a higher cure temperature. The substrate can be heated before applying the adhesive if desired. If an elevated temperature is used in the curing step, such a temperature may be, for example, 36°C or greater, or 50°C or greater. Such a temperature may be, for example, 150°C or less, or 140°C or less.

The methods disclosed may further comprise any one or more of the features described in this specification in any combination, including the preferences and examples listed in this specification, and can include the following features: the methods can further include the step of heating the two substrates at a temperature for a time to procure or fully cure the mixture so as to bond the two substrates together; the heat is applied by infrared heating. In one embodiment, the two substrates can be heated right after application of the adhesive composition to the substrate. In another embodiment, the time frame between the step of applying the adhesive composition to the substrate and the step of heating may be about 1 hour or more or about 24 hours or more; and at least one of the substrates is a fiber reinforced plastic.

In general, a layer of the three-component polyurethane adhesive composition is formed at a bondline between two substrates to form an assembly. The adhesive layer is then at least partially cured at the bondline by applying, for example, infrared radiation to the assembly or any other conventional heat source known to one skilled in the art. Infrared radiation may be applied, for example, until the temperature of the adhesive layer reaches 50°C or greater, or 90°C or greater, or 150°C or less, or 130°C or less. The assembly so heated may be maintained under infrared radiation until the adhesive layer has been exposed to such temperatures for a period of 5 seconds or more to effect the partial or complete cure. For example, the infrared radiation may be continued until the temperature of adhesive layer is 80°C to 150°C, or for 90°C to 130°C, at which time the exposure to infrared radiation may be discontinued. In one embodiment, the infrared radiation may be continued for a time period of 5 to 300 seconds, or from 10 to 200 seconds, or from 30 to 120 seconds, at which time the exposure to infrared radiation is discontinued.

If only a partial cure is performed by applying infrared radiation, the partial curing can be either or both of two types. In one type of partial curing, the entire adhesive layer is cured, but only partially. Such partial curing preferably is at least to the gel point, at which a three-dimensional polymeric network is formed in the adhesive layer by the curing of the components. In another type of partial curing, only one or more predetermined, localized portions of the adhesive layer at the bondline are cured. This produces an adhesive layer having at least partially cured portions and portions that have undergone little or no cure. The predetermined, localized portions of the adhesive layer may constitute, for example, 5 to 80%, or 5 to 50% or 5 to 25% of the total area of the adhesive layer. Subsequent to the partial curing step, the uncured or only partially cured portions of the adhesive layer then are cured further to form a fully-cured adhesive. The subsequent step of completing the cure can be done approximately room temperature (such as from 15 to 35°C) or an elevated temperature such as greater than 35°C to 80°C.

A two-step curing process as just described is useful in a variety of manufacturing, building and construction, and in-field assembly and repair applications. By performing only a partial cure by applying infrared radiation, a rapid bonding of the adhesive to the substrate can be obtained in a very short time, often a matter of 10 seconds to 2 minutes. This initial bond is often robust enough that the assembly can withstand further handling. The partially bonded components may be handled after a time of 1 hour or less, or 10 minutes or less, or 3 minutes or less or 1 minute or less. Further handing may include, for example, transporting the assembly to a downstream work station, and further manufacturing steps which might include joining the assembly to one or more other components, various shaping and/or machining steps, the application of a coating. The completion of the cure can take place during and/or after such additional handling steps.

The substrates are not limited. Suitable substrates include, for example, a metal, a coated metal, a metal alloy, an organic polymer, a lignocellulosic material such as wood, cardboard or paper, a ceramic material, various types of composites, plastics, reinforced plastics, glass or other materials. In one embodiment, a carbon fiber reinforced plastic is a suitable substrate.

Optionally, other materials commonly used in curable compositions may be used in the three-component polyurethane adhesive composition of this invention. Such materials are well known to those skilled in the art. Suitable materials include, for example, ultraviolet stabilizers, antioxidants, durability stabilizers. Suitable durability stabilizers include, for example, alkyl substituted phenols, phosphites, sebacates and cinnamates. In one embodiment, a class of durability stabilizers includes, for example, organophosphites. Such phosphites are disclosed in U.S. Patent No. 7,416,599. Suitable organophosphites include, for example, poly(dipropyleneglycol) phenyl phosphite (available from Dover Chemical Corporation under the trademark DOVERPHOS 12), tetrakis isodecyl 4,4'isopropylidene diphosphite (available from Dover Chemical Corporation under the trademark and designation DOVERPHOS 675), and phenyl diisodecyl phosphite (available from Dover Chemical Corporation under the trademark and designation DOVERPHOS 7). If employed, the organophosphites are present in a sufficient amount to enhance the durability of bond of the adhesive composition to the substrate surface. In one embodiment, the organophosphite is present in the three-component polyurethane adhesive composition in an amount of 0.1 weight percent or greater or 0.2 weight percent or greater, based on the total weight of the adhesive composition. In another embodiment, the organophosphite is present in the three-component polyurethane adhesive composition in an amount of about 1.0 weight percent or less or 0.5 weight percent or less, based on the total weight of the adhesive composition.

The compositions disclosed can exhibit a cure lap shear strength after 1 hour room temperature cure of greater than 0.3 MPa, or greater than 0.5 MPa or greater or 0.8 MPa or greater.

Molecular weights as described herein are number average molecular weights which may be determined by Gel Permeation Chromatography (also referred to as GPC). For polyurethane prepolymers, it is also possible to calculate approximate number average molecular weight from the equivalent ratio of the isocyanate compounds and of the polyol compounds with which they are reacted as known to the persons skilled in the art.

The following examples are provided to illustrate the disclosed compositions, but are not intended to limit the scope thereof. All parts and percentages are by weight unless otherwise indicated.

The following designations, symbols, terms and abbreviations are used in the Examples below:
Fomrez UL29 is a dioctyltinmercaptide catalyst, available from Momentive.

Polycat SA 1/10 is a 1,8-diazabicycloundec-7-ene based solid amine catalyst with a phenolic counter ion, available from Acima.

CP-4610 is a glycerin initiated ethylene oxide based propoxylated triol with an average molecular weight of 1800 g/mol and a nominal hydroxyl functionality of 33-37, available from The Dow Chemical Company under the trademark VORANOL CP 4610.

1,4-butane diol.

Polestar 200R is a calcined China clay (55% SiO₂, 45% Al₂O₃) with an average particle size of approx. 2 microns (90% > 10 microns), a BET surface of 8.5 m²/g and a pH of 6.0 - 6.5, available from Imerys.

AEROSIL^{®} R 202 is a fumed silica surface-treated with polydimethylsiloxane, available from Evonik Industries.

Molecular sieves of the type 4A.

Printex 30 is a carbon black filler, available from Alzchem.

Desmodur N3400 is an aliphatic polyisocyanate based on hexamethylene diisocyanate, having an isocyanate equivalent weight of 193, available from Bayer Material Sciences.

Isonate M143 is a modified liquid MDI product having an isocyanate functionality of about 2.2, an equivalent weight of about 143 and a viscosity of 40 mPas viscosity, available from the DOW Chemical Company.

Prepolymer is a prepolymer made by combining a polypropylene homopolymer with an average molecular weight of 1000 g/mol molecular weight and a OH number of approximately 55 mg KOH/g (17.74 parts), a nominally difunctional poly(propylene oxide) having a molecular weight of about 2000 and a hydroxyl equivalent weight of about 1000 (12.09 parts), the Isonate M143 described above (27.5 parts), and a plasticizer (18.07 parts) and heating the resulting mixture to a constant isocyanate content, to form a plasticized prepolymer. The plasticized prepolymer is then blended with a pure MDI product containing mostly the 4,4'-isomer and having an isocyanate equivalent weight of about 125 (5.08 parts) and carbon black (19 parts).

Open time is evaluated by manually dispensing the corresponding polyol component(s) and isocyanate component using Kröger TS 400 double cartridge application gun with a mounted static mixer unit, at an application pressure of at least 6 bar (606 kPa) onto a 30 to 50 mm bead having an 8 to 10 mm diameter and manually extruded onto a polyethylene film, and compressing successively the bead with a wooden spatula until the adhesive no longer sticks to the wooden surface. The measured time is defined as open time of the adhesive.

The reactivity of the adhesive is measured by rheology in oscillating mode with a parallel plate 20 mm diameter, 1 mm plate distance set-up. The measurements are done at 10 Hz with a constant deformation of 0.062%. The complex viscosity is plotted against the time and the time at which the slope of viscosity is changed more than 30° is considered to be the reactivity.

Samples for room temperature and 180 second IR cured lap shear strength measurements are prepared by forming a layer of the adhesive between two 100 × 45 × 2.2 mm cleaned carbon fiber reinforced plastic samples (Voraforce^{™} 5300, from The Dow Chemical Company), that overlap to form a bond area of 10 × 25 mm. The adhesive layer is 1.5 mm thick. The samples are manually ground with a 320 grinding pad prior to testing, until a uniform visual appearance is achieved. The adhesive is applied and the test samples assembled at room temperature.

In each case, multiple test specimens are prepared. Duplicate samples are evaluated for lap shear strength after one hour curing at 23°C and 50% relative humidity (RT cure) and separately after a 180 second IR cure. In the 180 second IR cure, the test specimen is placed in IR curing equipment and exposed to an IR source for 180 seconds such that the temperature of the adhesive increases, reaching 100-110°C for the final 10-20 seconds of the heating process. Lap shear strength is measured on the samples according to DIN EN 527 using a Zwick 1435 testing device equipped with a FHM 8606.00.00 or 8606.04.00 mounting device, beginning 5 to 10 seconds after the IR heating step is completed. E-coat substrates are Cathoguard 500 e-coated steel panels 100×25×0.8mm. E-coated substrates are cleaned with heptane. The flash off time of the solvent after cleaning prior to adhesive application is 5 min. Composite fiber reinforced plastic (CFRP) substrates with a dimension of 100×45×2.2 mm CFRP substrates are ground manually, using a 320 grinding pad on wet CFRP panels until homogeneous optical appearance is achieved or used without cleaning or mechanical pretreatment. Panels are successively dried 8h at 80°C. Adhesive bond dimensions of 10×25×1.5 mm are used for the lap shear specimens. Lap shear specimes are tested after 1 hour curing time at 23°C/50 percent relative humidity or respectively after the described heat accelerated curing process.

For heat accelerated curing, the assembled CFRP- CFRP lap shear specimens are placed after assembly in IR curing equipment. Lap shear specimens are built up with a bond height of 1.5 mm and an overlap area of 45 × 10 mm. The CFRP substrate, exposed to the IR source is heated during a 60 second to 10 minute curing process in such a way, that 100 to 110°C adhesive temperature is reached for a time period of 10 to 20 seconds.

For the examples below, a 3K Application was employed as follows:

### Application Machine:

3K pump and dosing equipment from the company SCA.
Blue pails, 35.5 cm inner diameter
Pump equipment: Air pressure operated Piston pump, RAM 80Ø, air engine 57:1
Tubing length: Total ca. 22 m as follows:

Pump to Y-Distributor on pump equipment 2.5 m × ¾ "inner diameter".
Y-distributor to fixed solid tubing on wall: 2.5 m × 1 "inner diameter".
Fixed solid tubing: inner diameter 16 mm: from pump equipment to dosing 10-12 m, whereas IsoC pass the longest distance and PolL the shortest distance.
Fixed solid tubing to dosing entry: 1 m × ½.
Dosing exit to peltier-element: 1 m × ½.
Fixed tubing to peltier-element 1.5 m × 16 mm inner diameter.
Fixed tubing after peltier-element to flexible tubing: 1 m × 16 mm inner diameter.

1 m flexible (tubing) isolated from ausleger to valve entry.
Temperature Control: Drum, tubing and dosing not temperature controlled, for every component Isocyanate, Pol L and Pol S there is an own peltier element 2 m before valve entry. After the peltier element the tubing is insulated.
Mix-head volume: 12.4 cubic centimeters (ccm), standard SCA dynamic mixer.
Piston-dosing electrically operatied: 3 × 160 ccm.

### Polyol Part Preparation Process

The following ingredients for the first polyol component designated as "Pol L" are combined, blended and stored in air moisture proof containers as set forth below in Table 1. The ingredient amounts are also shown in Table 4.

**Table 1**

| First Polyol Component (Pol L) | |
|---|---|
| Component | Weight Percent |
| Fomrez UL29 | 0.045 |
| Polycat SA | 0.11 |
| CP-4610 | 48.54 |
| 1,4-butanediol | 5 |
| Polstar 200R | 43.81 |
| AEROSIL^{®} R 202 | 1.5 |
| Molecular sieves | 1 |

The following ingredients for the second polyol component designated as "Pol S" are combined, blended and stored in air moisture proof containers as set forth below in Table 2. The ingredient amounts are also shown in Table 4.

**Table 2**

| Second Polyol Component (Pol S) | |
|---|---|
| Component | Weight Percent |
| Fomrez UL29 | 0.08 |
| Polycat SA | 0.18 |
| CP-4610 | 48.92 |
| 1,4-butanediol | 5 |
| Polstar 200R | 43.32 |
| AEROSIL^{®} R 202 | 1.5 |
| Molecular sieves | 1 |

### Isocyanate Component

The following ingredients for the isocyanate component designated as "IsoC" are combined, blended and stored in air moisture proof containers as set forth below in Table 3.

**Table 3**

| Isocyanate component | |
|---|---|
| Component | Weight Percent |
| Carbon Black | 19 |
| Aliphatic Polyisocyanate | 5 |
| Liquid methylene diphenyl isocyanate | 22.5 |
| Prepolymer | 53.5 |

### Testing

Reactivity was measured by rheology. 1h and 2h lap shear strengths are measured with e-coated steel substrates with 15 × 25 × 1.5 mm adhesion dimension. Lab shear heat cure experiments are run with a 180 s heating cycle and Dow CFK substrates with adhesion dimensions 45 × 15 × 1.5 mm. The components were applied in the lab from cartridges as well as with 3K application equipment. Thus, Example 1 was prepared by mixing Comparative Examples 1 and 2 in the listed mixing ratio in (1) a planetary mixer for 20 minutes under vacuum for the performance data when applied with cartridges (outside the scope of the invention), and (2) in a dynamic mixer of the 3K application equipment for the automatically applied material for 1.24 s. The 3K application equipment was run at 10 ml/s flow rate with 1000 rpm mixer rotation. The results are set forth in Table 4. The first and second polyol components (Pol L and Pol S, respectively) were utilized in various ratios.

**Table 4**

| | Comp. Ex. 1 Pol L:Pol S:IsoC | Comp. Ex. 2 Pol L:Pol S:IsoC | Comp. Ex. 3 | Comp. Ex. 4 | Example 1 Pol L:Pol S:IsoC |
|---|---|---|---|---|---|
| | 50:00:50 | 00:50:50 | A | B | 25:25:50 |
| POLYOL COMPONENT | | | | | |
| Fomrez UL29 (w%) | 0.045 | 0.08 | | 0.125 | 0.0625^{∗} |
| Polycat SA 1/10 (w%) | 0.11 | 0.18 | 0.29 | | 0.145^{∗} |
| Voranol CP4610 (w%) | 48.54 | 48.92 | 48.54 | 48.54 | 48.73 |
| 1,4-Butanediol (w%) | 5 | 5 | 5 | 5 | 5 |
| Polestar 200R (w%) | 43.81 | 43.32 | 43.81 | 43.81 | 43.56 |
| Aerosil R202 (w%) | 1.5 | 1.5 | 1.5 | 1.5 | 1.5 |
| Molecular Sieves 4A (w%) | 1 | 1 | 1 | 1 | 1 |
| | | | | | |
| Flow Rate Viscosity of Polyol component (Ballan, 2 mm, 4 bar, 23 °C, [g/min]) | 29 | 33 | 29 | 29 | - |
| | | | | | |
| ISOCYANATE COMPONENT | | | | | |
| Printex 30 (wt. %) | 19 | 19 | 19 | 19 | 19 |
| Desmodur N3400 (wt. %) | 5 | 5 | 5 | 5 | 5 |
| Isonate M143 (wt. %) | 22.5 | 22.5 | 22.5 | 22.5 | 22.5 |
| Prepolymer (wt. %) | 53.5 | 53.5 | 53.5 | 53.5 | 53.5 |
| | | | | | |
| Flow Rate Viscosity of Isocyanate component (Ballan, 2 mm, 4 bar, 23 °C) | 30 | 30 | | | - |
| Performance data when applied from cartridges, static mixing | | | | | |
| | | | | | |
| Tack Free Time (min) | 16 | 7.5 | 40 | 3.5 | 10.5 |
| Rheology Reactivity (s) | 830 | 610 | 2030 | 320 | 780 |
| 1h RT Lap Shear Strength (MPa) | 0.12 ± 0.01 | 0.46 ± 0.19 | 0 | 3.22 | 0.19 ± 0.13 |
| 24h RT Lap Shear Strength (MPa) | 7.62 ± 0.33 | 10.57 ± 0.25 | 1.49 | 9.33 | 7.05 ± 0.31 |
| IR Initial Lap Shear Strength (MPa) | 2.12 ± 0.9 | 3.25 ± 0.08 | 0.15 | 2.61 | 3.26 ± 0.20 |
| IR + 1h RT Lap Shear Strength (MPa) | 7.33 ± 0.10 | 7.43 ± 0.55 | 0.51 | 6.26 | 8.36 ± 1.17 |
| Performance data when applied with 3K application equipment, dynamic mixing (10 ml/s, 1000 rpm) | | | | | |
| | | | | | |
| Tack Free Time (min) | 10-11 | 4-4.5 | | | 7-7.5 |
| 1h RT Lap Shear Strength (MPa) | 0.16 ± 0.02 | 0.71 ±0.07 | | | 0.32 ± 0.03 |
| 24h RT Lap Shear Strength (MPa) | 7.51 ± 0.40 | 12.04 ± 0.01 | | | 9.44 ± 0.15 |
| IR + 1h RT Lap Shear Strength (MPa) | 5.43 ± 0.57 | 9.01 ± 0.18 | | | 7.54 ± 0.31 |
| Frequency of Flushes (flush / minute) | 0.33 | 1 | | | 0.5 |

| | | | | | |
|---|---|---|---|---|---|
| *calculated catalyst levels after mixing Comparative Example 1 and 2. | | | | | |

Comparative Examples 1 and 2 were applied at a 1:1 (by volume) ratio of polyol component to isocyanate component (i.e., a 2K polyurethane adhesive) from cartridges with static mixing in the lab, or with automated application equipment with static or dynamic mixing. The mechanical properties of Comparative Examples 1 and 2 are the same or very comparable, but the two adhesive compositions are different in their cure kinetics. Comparative Example 1 is considered to be a "slow" system with a long open time - measured as the tack free time (TFT). Comparative Example 2 is considered to be a "fast" system with a short open time (TFT). The formulations of Comparative Examples 1 and 2 are very comparable and are different in the amount of tin catalyst (Fomrez UL29) and amine catalyst (Polycat SA 1/10).

When the adhesive composition of Comparative Example 1 was applied with the 3K application equipment with a dynamic mix-head (12.5 ml volume) with 1000 rpm mix-head rotation and 10 ml/s flow rate, a tack free time of 10 to 11 minutes and a one hour (1h) lap shear strength of 0.16 MPa was obtained. When the adhesive composition of Comparative Example 2 was applied with the 3K application equipment as with Comparative Example 1, a tack free time of 4 to 4.5 minutes, and a 1h RT lap shear strength of 0.71 MPa was obtained. The adhesive composition of Example 1 was prepared in which the slow and fast polyol components of Comparative Examples 1 and 2 are mixed together with the isocyanate component in a 25:25:50 volume ratio in 1.24 seconds in the dynamic mix-head. The open time and the lap shear strength of the adhesive composition Example 1 fell in between Comparative Examples 1 and 2 and are very comparable to the data when Comparative Examples 1 and 2 are being mixed on a laboratory mixer for 1h. Therefore, the 3K application equipment can be advantageously utilized with the adhesive composition of Example 1 with a limited amount of flushing while also having a desired open time in a short period of time.

## Claims

1. A three-component polyurethane adhesive composition comprising:
(a) a first polyol component comprising (i) one or more polyols having a hydroxyl equivalent weight of 400 to 2000 and a nominal hydroxyl functionality of 2 to 4; (ii) one or more aliphatic diol chain extenders; (iii) from 0.01 to 1 weight percent, based on the total weight of the first polyol component, of one or more latent room temperature organometallic catalysts; and (iv) from 0.01 to 1 weight percent, based on the total weight of the first polyol component, of one or more blocked cyclic amidine compound catalysts;
(b) a second polyol component comprising (i) one or more polyols having a hydroxyl equivalent weight of 400 to 2000 and a nominal hydroxyl functionality of 2 to 4; (ii) one or more aliphatic diol chain extenders; (iii) from 0.01 to 1 weight percent, based on the total weight of the second polyol component, of one or more latent room temperature organometallic catalysts; and (iv) from 0.01 to 1 weight percent, based on the total weight of the second polyol component, of one or more blocked cyclic amidine compound catalysts; and
(c) an isocyanate component comprising (i) one or more isocyanate compounds; wherein the isocyanate component and the first and second polyol components are contacted at an isocyanate index of 0.5 to 2.

2. The three-component polyurethane adhesive composition of Claim 1, wherein the one or more aliphatic diol chain extenders of the first polyol component and the second polyol component are the same or different and each have a hydroxyl equivalent weight of 200 or less and two aliphatic hydroxyl groups per molecule.

3. The three-component polyurethane adhesive composition of Claim 1, wherein the isocyanate component includes both aliphatic and aromatic isocyanates.

4. The three-component polyurethane adhesive composition of Claim 1, wherein the one or more latent room temperature organometallic catalysts of the first polyol component and the second polyol component are the same or different and contain tin, zinc or bismuth comprising zinc alkanoates, bismuth alkanoates, dialkyltin alkanoates, dialkyl tin mercaptides, dialkyl tin bis(alkylmercaptoacetates), dialkyltin thioglycolates or mixtures thereof.

5. The three-component polyurethane adhesive composition of Claim 1, wherein the one or more blocked cyclic amidine compound catalysts comprise 1,8-diazabicyclo[5.4.0]undec-7-ene or 1,5-diazabicyclo[4 .3.0]non-5-ene.

6. The three-component polyurethane adhesive composition of Claim 1, wherein:
the first polyol component (a) comprises 0.02 to 0.3 weight percent, based on the total weight of the first polyol component, of the one or more latent room temperature organometallic catalysts (iii); and 0.03 to 0.5 weight percent, based on the total weight of the first polyol component, of the one or more blocked cyclic amidine compound catalysts (iv); and
the second polyol component (b) comprises 0.02 to 0.3 weight percent, based on the total weight of the second polyol component, of the one or more latent room temperature organometallic catalysts (iii); and 0.03 to 0.5 weight percent, based on the total weight of the second polyol component, of the one or more blocked cyclic amidine compound catalysts (iv).

7. The three-component polyurethane adhesive composition of Claim 1, comprising a volume ratio of the first polyol component to the second polyol component to the isocyanate component of 0.1:49.9:50 to 49.9:0.1:50.

8. The three-component polyurethane adhesive composition of Claim 1, having an open time of 3 minutes or greater after contacting the first polyol component, the second polyol component and the isocyanate component.

9. The three-component polyurethane adhesive composition of Claim 1, wherein at least one of the first polyol component, the second polyol component and the isocyanate component further comprises one or more particulate fillers.

10. A process for preparing a three-component polyurethane adhesive composition comprising:
(a) metering a first stream comprising a first polyol component into an in-line mixing unit, wherein the first polyol component comprises (i) one or more polyols having a hydroxyl equivalent weight of 400 to 2000 and a nominal hydroxyl functionality of 2 to 4; (ii) one or more aliphatic diol chain extenders; (iii) from 0.01 to 1 weight percent, based on the total weight of the first polyol component, of one or more latent room temperature organometallic catalysts; and (iv) from 0.01 to 1 weight percent, based on the total weight of the first polyol component, of one or more blocked cyclic amidine compound catalysts;
(b) metering a second stream comprising a second polyol component into the in-line mixing unit, wherein the second polyol component comprises (i) one or more polyols having a hydroxyl equivalent weight of 400 to 2000 and a nominal hydroxyl functionality of 2 to 4; (ii) one or more aliphatic diol chain extenders; (iii) from 0.01 to 1 weight percent, based on the total weight of the second polyol component, of one or more latent room temperature organometallic catalysts; and (iv) from 0.01 to 1 weight percent, based on the total weight of the second polyol component, of one or more blocked cyclic amidine compound catalysts;
(c) metering a third stream comprising an isocyanate component into the in-line mixing unit, wherein the isocyanate component comprises (i) one or more isocyanate compounds; wherein the isocyanate component and the first and second polyol components are contacted at an isocyanate index of 0.5 to 2;
wherein the first polyol component, second polyol component and isocyanate component are contacted in the in-line mixing unit to form the three-component polyurethane adhesive composition; and
(d) dispensing the three-component polyurethane adhesive composition.

11. The process according to Claim 10, wherein the one or more latent room temperature organometallic catalysts of the first polyol component and the second polyol component are the same or different and are zinc alkanoates, bismuth alkanoates, dialkyltin alkanoates, dialkyl tin mercaptides, dialkyl tin bis(alkylmercaptoacetates), dialkyltin thioglycolates or mixtures thereof, and the one or more blocked cyclic amidine compound catalysts of the first polyol component and the second polyol component are the same or different and are 1,8-diazabicyclo[5.4.0]undec-7-ene or 1,5 -diazabicyclo[4 .3.0]non-5-ene.

12. The process according to Claim 10, wherein the three-component polyurethane adhesive composition comprises a volume ratio of the first polyol component to the second polyol component to the isocyanate component of 0.1:49.9:50 to 49.9:0.1:50.

13. The process according to Claim 10, wherein at least one of the first polyol component, the second polyol component and the isocyanate component of the three-component polyurethane adhesive composition further comprises one or more particulate fillers.

14. The process according to Claim 10, wherein the in-line mixing unit is one of a static mixing unit or a dynamic mixing unit.

15. The process according to Claim 10, further comprising:
(e) applying the three-component polyurethane adhesive composition to at least a portion of a first substrate; and
(f) contacting a second substrate with the first substrate with the three-component polyurethane adhesive composition being disposed between the first and second substrate.

## Patentansprüche

1. Dreikomponentige Polyurethan-Klebstoffzusammensetzung umfassend:
a) eine erste Polyolkomponente umfassend (i) ein oder mehrere Polyole, die ein Hydroxyläquivalenzgewicht von 400 bis 2000 und eine nominelle Hydroxylfunktionalität von 2 bis 4 aufweisen; (ii) ein oder mehrere aliphatische Diol-Kettenverlängerungsmittel; (iii) 0,01 bis 1 Gewichtsprozent, auf das Gesamtgewicht der ersten Polyolkomponente bezogen, eines oder mehrerer latenter organometallischer Raumtemperaturkatalysatoren; und (iv) 0,01 bis 1 Gewichtsprozent, auf das Gesamtgewicht der ersten Polyolkomponente bezogen, eines oder mehrerer blockierter cyclischer Amidinverbindungskatalysatoren;
(b) eine zweite Polyolkomponente umfassend (i) ein oder mehrere Polyole, die ein Hydroxyläquivalenzgewicht von 400 bis 2000 und eine nominelle Hydroxylfunktionalität von 2 bis 4 aufweisen; (ii) ein oder mehrere aliphatische Diol-Kettenverlängerungsmittel; (iii) 0,01 bis 1 Gewichtsprozent, auf das Gesamtgewicht der zweiten Polyolkomponente bezogen, eines oder mehrerer latenter organometallischer Raumtemperaturkatalysatoren; und (iv) 0,01 bis 1 Gewichtsprozent, auf das Gesamtgewicht der zweiten Polyolkomponente bezogen, einer oder mehrerer blockierter cyclischer Amidinverbindungskatalysatoren; und
(c) eine Isocyanatkomponente umfassend (i) eine oder mehrere Isocyanatverbindungen, wobei die Isocyanatkomponente und die erste und die zweite Polyolkomponente bei einem Isocyanatindex von 0,5 bis 2 in Kontakt gebracht werden.

2. Dreikomponentige Polyurethan-Klebstoffzusammensetzung nach Anspruch 1, wobei das eine oder die mehreren aliphatischen Diol-Kettenverlängerungsmittel der ersten Polyolkomponente und der zweiten Polyolkomponente gleich oder verschieden sind und jedes ein Hydroxyläquivalenzgewicht von 200 oder weniger und zwei aliphatische Hydroxylgruppen pro Molekül aufweist.

3. Dreikomponentige Polyurethan-Klebstoffzusammensetzung nach Anspruch 1, wobei die Isocyanatkomponente sowohl aliphatische als auch aromatische Isocyanate einschließt.

4. Dreikomponentige Polyurethan-Klebstoffzusammensetzung nach Anspruch 1, wobei der eine oder die mehreren latenten organometallischen Raumtemperaturkatalysatoren der ersten Polyolkomponente und der zweiten Polyolkomponente gleich oder verschieden sind und Zinn, Zink oder Wismut, das Zinkalkanoate, Wismutalkanoate, Dialkylzinnalkanoate, Dialkylzinnmercaptide, Dialkylzinnbis(alkylmercaptoacetate), Dialkylzinnthioglycolate oder Mischungen davon umfasst, enthalten.

5. Dreikomponentige Polyurethan-Klebstoffzusammensetzung nach Anspruch 1, wobei der eine oder die mehreren geblockten cyclischen Amidinverbindungskatalysatoren 1,8-Diazabicyclo[5.4.0]undec-7-en oder 1,5-Diazabicyclo[4.3.0]non-5-en umfassen.

6. Dreikomponentige Polyurethan-Klebstoffzusammensetzung nach Anspruch 1, wobei
die erste Polyolkomponente (a) 0,02 bis 0,3 Gewichtsprozent, auf das Gesamtgewicht der ersten Polyolkomponente bezogen, des einen oder der mehreren latenten organometallischen Raumtemperaturkatalysatoren (iii) und 0,03 bis 0,5 Gewichtsprozent, auf das Gesamtgewicht der ersten Polyolkomponente bezogen, des einen oder der mehreren geblockten cyclischen Amidinverbindungskatalysatoren (iv) umfasst; und
die zweite Polyolkomponente (b) 0,02 bis 0.3 Gewichtsprozent, auf das Gesamtgewicht der zweiten Polyolkomponente bezogen, des einen oder der mehreren latenten organometallischen Raumtemperaturkatalysatoren (iii) und 0,03 bis 0,5 Gewichtsprozent, auf das Gesamtgewicht der zweiten Polyolkomponente bezogen, des einen oder der mehreren geblockten cyclischen Amidinverbindungskatalysatoren (iv) umfasst.

7. Dreikomponentige Polyurethan-Klebstoffzusammensetzung nach Anspruch 1, umfassend ein Volumenverhältnis der ersten Polyolkomponente zu der zweiten Polyolkomponente zu der Isocyanatkomponente von 0,1:49,9:50 bis 49,9:0,1:50.

8. Dreikomponentige Polyurethan-Klebstoffzusammensetzung nach Anspruch 1, die eine Offenzeit von 3 Minuten oder länger nach In-Kontakt-Bringen der ersten Polyolkomponente, der zweiten Polyolkomponente und der Isocyanatkomponente aufweist.

9. Dreikomponentige Polyurethan-Klebstoffzusammensetzung nach Anspruch 1, wobei mindestens eine von der ersten Polyolkomponente, der zweiten Polyolkomponente und der Isocyanatkomponente ferner einen oder mehrere teilchenförmige Füllstoffe umfasst.

10. Verfahren für die Herstellung einer dreikomponentigen Polyurethan-Klebstoffzusammensetzung umfassend:
(a) Dosieren eines ersten Stroms umfassend eine erste Polyolkomponente in eine In-Line-Mischeinheit, wobei die erste Polyolkomponente (i) ein oder mehrere Polyole, die ein Hydroxyläquivalenzgewicht von 400 bis 2000 und eine nominelle Hydroxylfunktionalität von 2 bis 4 aufweisen, (ii) ein oder mehrere aliphatische Diol-Kettenverlängerungsmittel, (iii) 0,01 bis 1 Gewichtsprozent, auf das Gesamtgewicht der ersten Polyolkomponente bezogen, eines oder mehrerer latenter organometallischer Raumtemperaturkatalysatoren und (iv) 0,01 bis 1 Gewichtsprozent, auf das Gesamtgewicht der ersten Polyolkomponente bezogen, eines oder mehrerer blockierter cyclischer Amidinverbindungskatalysatoren umfasst;
(b) Dosieren eines zweiten Stroms umfassend eine zweite Polyolkomponente in eine In-Line-Mischeinheit, wobei die zweite Polyolkomponente (i) ein oder mehrere Polyole, die ein Hydroxyläquivalenzgewicht von 400 bis 2000 und eine nominelle Hydroxylfunktionalität von 2 bis 4 aufweisen, (ii) ein oder mehrere aliphatische Diol-Kettenverlängerungsmittel, (iii) 0,01 bis 1 Gewichtsprozent, auf das Gesamtgewicht der zweiten Polyolkomponente bezogen, eines oder mehrerer latenter organometallischer Raumtemperaturkatalysatoren und (iv) 0,01 bis 1 Gewichtsprozent, auf das Gesamtgewicht der zweiten Polyolkomponente bezogen, eines oder mehrerer blockierter cyclischer Amidinverbindungskatalysatoren umfasst;
(c ) Dosieren eines dritten Stroms umfassend eine Isocyanatkomponente in die In-Line-Mischeinheit, wobei die Isocyanatkomponente (i) eine oder mehrere Isocyanatverbindungen umfasst, wobei die Isocyanatkomponente und die erste und die zweite Polyolkomponente bei einem Isocyanatindex von 0,5 bis 2 in Kontakt gebracht werden;
wobei die erste Polyolkomponente, die zweite Polyolkomponente und die Isocyanatkomponente in der In-Line-Mischeinheit in Kontakt gebracht werden, um die dreikomponentige Polyurethan-Klebstoffzusammensetzung zu bilden; und
(d) Abgeben der dreikomponentigen Polyurethan-Klebstoffzusammensetzung.

11. Verfahren nach Anspruch 10, wobei der eine oder die mehreren latenten organometallischen Raumtemperaturkatalysatoren der ersten Polyolkomponente und der zweiten Polyolkomponente gleich oder verschieden sind und Zinkalkanoate, Wismutalkanoate, Dialkylzinnalkanoate, Dialkylzinnmercaptide, Dialkylzinnbis(alkylmercaptoacetate), Dialkylzinnthioglycolate oder Mischungen davon sind und der eine oder die mehreren geblockten cyclischen Amidinverbindungskatalysatoren der ersten Polyolkomponente und der zweiten Polyolkomponente gleich oder verschieden sind und 1,8-Diazabicyclo[5.4.0]undec-7-en oder 1,5-Diazabicyclo[4.3.0]non-5-en sind.

12. Verfahren nach Anspruch 10, wobei die dreikomponentige Polyurethan-Klebstoffzusammensetzung ein Volumenverhältnis der ersten Polyolkomponente zu der zweiten Polyolkomponente zu der Isocyanatkomponente von 0,1:49,9:50 bis 49,9:0,1:50 umfasst.

13. Verfahren nach Anspruch 10, wobei mindestens eine von der ersten Polyolkomponente, der zweiten Polyolkomponente und der Isocyanatkomponente der dreikomponentigen Polyurethan-Klebstoffzusammensetzung ferner einen oder mehrere teilchenförmige Füllstoffe umfasst.

14. Verfahren nach Anspruch 10, wobei die In-Line-Mischeinheit eine von einer statischen Mischeinheit oder einer dynamischen Mischeinheit ist.

15. Verfahren nach Anspruch 10, ferner Folgendes umfassend:
(e) Aufbringen der dreikomponentigen Polyurethan-Klebstoffzusammensetzung auf mindestens einen Teil eines ersten Substrats; und
(f) In-Kontakt-Bringen eines zweiten Substrats mit dem ersten Substrat mit der dreikomponentigen Polyurethan-Klebstoffzusammensetzung, die zwischen dem ersten und zweiten Substrat angeordnet ist.

## Revendications

1. Composition adhésive de polyuréthane à trois composants comprenant :
(a) un premier composant de polyol comprenant (i) un ou plusieurs polyols présentant un poids équivalent en hydroxyle de 400 à 2000 et une fonctionnalité hydroxyle nominale de 2 à 4 ; (ii) un ou plusieurs agents d'allongement de chaîne diol aliphatique ; (iii) de 0,01 à 1 pour cent en poids, sur la base du poids total du premier composant de polyol, d'un ou plusieurs catalyseurs organométalliques à température ambiante latents ; et (iv) de 0,01 à 1 pour cent en poids sur la base du poids total du premier composant de polyol, d'un ou plusieurs catalyseurs de composé d'amidine cyclique bloqués ;
(b) un second composant de polyol comprenant (i) un ou plusieurs polyols présentant un poids équivalent en hydroxyle de 400 à 2000 et une fonctionnalité hydroxyle nominale de 2 à 4 ; (ii) un ou plusieurs agents d'allongement de chaîne diol aliphatique ; (iii) de 0,01 à 1 pour cent en poids, sur la base du poids total du second composant de polyol, d'un ou plusieurs catalyseurs organométalliques à température ambiante latents ; et (iv) de 0,01 à 1 pour cent en poids sur la base du poids total du second composant de polyol, d'un ou plusieurs catalyseurs de composé d'amidine cyclique bloqués ; et
(c) un composant d'isocyanate comprenant (i) un ou plusieurs composés d'isocyanate ; dans lequel le composant d'isocyanate et le premier et le second composant de polyol sont mis en contact à un indice d'isocyanate de 0,5 à 2.

2. Composition adhésive de polyuréthane à trois composants selon la revendication 1, dans laquelle un ou plusieurs agents d'allongement de chaîne diol aliphatique du premier composant de polyol et du second composant de polyol sont identiques ou différents et chacun présente un poids équivalent en hydroxyle de 200 ou moins et deux groupes hydroxyle aliphatiques par molécule.

3. Composition adhésive de polyuréthane à trois composants selon la revendication 1, dans laquelle le composant d'isocyanate inclut à la fois des isocyanates aliphatiques et aromatiques.

4. Composition adhésive de polyuréthane à trois composants selon la revendication 1, dans laquelle le ou les catalyseurs organométalliques à température ambiante latents du premier composant de polyol et du second composant de polyol sont identiques ou différents et contiennent de l'étain, du zinc, ou du bismuth, comprenant des alcanoates de zinc, des alcanoates de bismuth, des alcanoates de dialkyl-étain, des mercaptides de dialkyl-étain, des bis(alkylmercaptoacétates) de dialkyl-étain, des thioglycolates de dialkyl-étain ou des mélanges correspondants.

5. Composition adhésive de polyuréthane à trois composants selon la revendication 1, dans laquelle le ou les catalyseurs de composé d'amidine cyclique bloqués comprennent du 1,8-diazabicyclo[5.4.0]undéc-7-ène ou un 1,5-diazabicyclo[4.3.0]non-5-ène.

6. Composition adhésive de polyuréthane à trois composants selon la revendication 1, dans laquelle :
le premier composant de polyol (a) comprend 0,02 à 0,3 pour cent en poids, sur la base du poids total du premier composant de polyol, du ou des catalyseurs organométalliques à température ambiante latents (iii) ; et 0,03 à 0,5 pour cent en poids, sur la base du poids total du premier composant de polyol, du un ou plusieurs catalyseurs de composé d'amidine cyclique bloqués (iv) ; et
le second composant de polyol (b) comprend 0,02 à 0,3 pour cent en poids, sur la base du poids total du second composant de polyol, de l'un ou plusieurs catalyseurs organométalliques à température ambiante latents (iii) ; et 0,03 à 0,5 pour cent en poids, sur la base du poids total du second composant de polyol, du un ou plusieurs catalyseurs de composé d'amidine cyclique bloqués (iv).

7. Composition adhésive de polyuréthane à trois composants selon la revendication 1, comprenant un rapport en volume du premier composant de polyol sur le second composant de polyol sur le composant d'isocyanate de 0,1:49,9:50 à 49,9:0,1:50.

8. Composition adhésive de polyuréthane à trois composants selon la revendication 1, présentant un temps ouvert de 3 minutes ou plus après la mise en contact du premier composant de polyol, du second composant de polyol et du composant d'isocyanate.

9. Composition adhésive de polyuréthane à trois composants selon la revendication 1, dans laquelle au moins un du premier composant de polyol, du second composant de polyol et du composant d'isocyanate comprend en outre une ou plusieurs charges particulaires.

10. Procédé de préparation d'une composition adhésive de polyuréthane à trois composants comprenant :
(a) le dosage d'un premier courant comprenant un premier composant de polyol dans une unité de mélange en ligne, dans lequel le premier composant de polyol comprend (i) un ou plusieurs polyols présentant un poids équivalent en hydroxyle de 400 à 2000 et une fonctionnalité hydroxyle nominale de 2 à 4; (ii) un ou plusieurs agents d'allongement de chaîne diol aliphatique ; (iii) de 0,01 à 1 pour cent en poids, sur la base du poids total du premier composant de polyol, d'un ou plusieurs catalyseurs organométalliques à température ambiante latents ; et (iv) de 0,01 à 1 pour cent en poids sur la base du poids total du premier composant de polyol, d'un ou plusieurs catalyseurs de composé d'amidine cyclique bloqués ;
(b) le dosage d'un deuxième courant comprenant un second composant de polyol dans l'unité de mélange en ligne, dans lequel le second composant de polyol comprend (i) un ou plusieurs polyols présentant un poids équivalent en hydroxyle de 400 à 2000 et une fonctionnalité hydroxyle nominale de 2 à 4; (ii) un ou plusieurs agents d'allongement de chaîne diol aliphatique ; (iii) de 0,01 à 1 pour cent en poids, sur la base du poids total du premier composant de polyol, d'un ou plusieurs catalyseurs organométalliques à température ambiante latents ; et (iv) de 0,01 à 1 pour cent en poids sur la base du poids total du second composant de polyol, d'un ou plusieurs catalyseurs de composé d'amidine cyclique bloqués ;
(c) le dosage d'un troisième courant comprenant un composant d'isocyanate dans l'unité de mélange en ligne, dans lequel le composant d'isocyanate comprend (i) un ou plusieurs composés d'isocyanate ; dans lequel le composant d'isocyanate et le premier et le second composant de polyol sont mis en contact à un indice d'isocyanate de 0,5 à 2 ;
dans lequel le premier composant de polyol, le second composant de polyol et le composant d'isocyanate sont mis en contact dans l'unité de mélange en ligne pur former la composition adhésive de polyuréthane à trois composants ; et
(d) la distribution de la composition adhésive de polyuréthane à trois composants.

11. Procédé selon la revendication 10, dans lequel le ou les catalyseurs organométalliques à température ambiante latents du premier composant de polyol et du second composant de polyol sont identiques ou différents et sont des alcanoates de zinc, des alcanoates de bismuth, des alcanoates de dialkyl-étain, des mercaptides de dialkyl-étain, des bis(alkylmercaptoacétates) de dialkyl-étain, des thioglycolates de dialkyl-étain ou des mélanges correspondants, et le ou les composants d'amidine cycliques bloqués du premier composant de polyol et du second composant de polyol sont identiques ou différents et sont du 1,8-diazabicyclo[5.4.0]undéc-7-ène ou un 1,5-diazabicyclo[4.3.0]non-5-ène.

12. Procédé selon la revendication 10, dans lequel la composition adhésive de polyuréthane à trois composants comprend un rapport en volume du premier composant de polyol sur le second composant de polyol et sur le composant d'isocyanate de 0,1:49,9:50 à 49,9:0,1:50.

13. Procédé selon la revendication 10, dans lequel au moins un du premier composant de polyol, du second composant de polyol et du composant d'isocyanate de la composition adhésive de polyuréthane à trois composants comprend en outre une ou plusieurs charges particulaires.

14. Procédé selon la revendication 10, dans lequel l'unité de mélange en ligne est l'une d'une unité de mélange statique ou d'une unité de mélange dynamique.

15. Procédé selon la revendication 10, comprenant en outre :
(e) l'application de la composition adhésive de polyuréthane à trois composants sur au moins une partie d'un premier substrat ; et
(f) la mise en contact d'un second substrat avec le premier substrat avec la composition adhésive de polyuréthane à trois composants disposée entre le premier et le second substrat.
